# EUROPÄISCHE PATENTSCHRIFT

(11) **EP 4 006 500 B1**
(45) Veröffentlichungstag und Bekanntmachung des Hinweises auf die Patenterteilung: **10.07.2024**
(21) Anmeldenummer: 22150323.8
(22) Anmeldetag: 30.10.2017
(51) Int. Cl.: G01F 15/18, B22F 5/10, B22F 7/08, B22F 10/22, B33Y 80/00

(54) **MESSROHR FÜR EIN MESSGERÄT BZW. MITTELS EINES SOLCHEN MESSROHRS GEBILDETES MESSGERÄT SOWIE HERSTELLVERFAHREN FÜR EIN SOLCHES MESSROHR**
MEASURING TUBE FOR A MEASURING INSTRUMENT OR MEASURING DEVICE FORMED BY SUCH A MEASURING TUBE AND METHOD FOR MANUFACTURING SUCH A MEASURING TUBE
TUBE DE MESURE POUR UN APPAREIL DE MESURE OU APPAREIL DE MESURE FORMÉ AU MOYEN D'UN TEL TUBE DE MESURE, AINSI QUE PROCÉDÉ DE FABRICATION POUR UN TEL TUBE DE MESURE

(30) Priorität: 14.12.2016 DE 102016124358
(43) Veröffentlichungstag der Anmeldung: 01.06.2022
(62) Teilanmeldung aus: 17797575.2
(73) Patentinhaber: Endress + Hauser Flowtec AG, 4153 Reinach (CH)
(72) Erfinder: Undi, Torsten, 79618 Rheinfelden (DE); Strub, Andreas, 79576 Weil am Rhein (DE); Kade, Andris, 79689 Maulburg (DE)
(74) Vertreter: Hahn, Christian

(56) Entgegenhaltungen:
- DE-A1- 102010 043 781
- DE-A1- 102014 119 073
- US-A- 5 962 790
- US-A- 6 003 384
- US-A1- 2016 202 101

## Beschreibung

Die Erfindung betrifft ein für ein Meßgerät vorgesehenes Meßrohr mit einem röhrenförmigen, Grundkörper und einer darauf angeordnete Sensorhalterung für einen Sensor, ein Herstellungsverfahren für ein solches Meßrohr bzw. ein mittels eines solchen Meßrohrs gebildetes Meßgerät.

In der Prozeßmeß- und Automatisierungstechnik werden für die Messung von Meßgrößen fluider bzw. strömender Meßstoffe, beispielsweise nämlich von in Rohrleitungen strömenden Flüssigkeiten oder Gasen, Meßgeräte mit einem in den Verlauf einer den jeweiligen Meßstoff führenden Rohrleitung, beispielsweise mittels Flanschverbindung, eingegliederte Meßrohr sowie einem daran angebrachten Sensor verwendet, der dafür eingerichtet ist, wenigstens eine Meßgröße zu erfassen und in ein korrespondierendes, nämlich von der wenigstens einen Meßgröße abhängiges Sensorsignal zu wandeln. Zum Verarbeiten des Sensorsignals weist ein solches Meßgerät zudem eine mit dem Sensor elektrisch verbundene, beispielsweise auch mittels wenigstens eines Mikroprozessors gebildete, Meßelektronik auf, die dafür eingerichtet ist, das wenigstens eine Sensorsignal zu empfangen und basierend auf dem wenigstens einen Sensorsignal Meßwerte für die wenigstens eine Meßgröße zu ermitteln. Bei der Meßgröße kann es sich beispielsweise um eine Volumendurchflußrate, eine Massendurchflußrate, eine Strömungsgeschwindigkeit oder einen anderen Strömungsparameter oder aber beispielsweise auch um eine Dichte, eine Temperatur, einen Druck oder einen pH-Wert handeln, mithin kann das Meßgerät als ein Durchflußmeßgerät, beispielsweise nämlich ein Wirbel-Durchflußmeßgerät, ein Ultraschall-Durchflußmeßgerät, ein Coriolis-Durchflußmeßgerät, ein thermisches Durchflußmeßgerät oder ein magnetisch-induktives Durchflußmeßgerät, ein Temperatur-Meßgerät, Druck-Meßgerät oder pH-Wert-Meßgerät ausgebildet sein. Beispiele für solche Meßgeräte sind u.a. in der DE-A 10 2013 114 382, der DE-A 10 2013 114 483, der DE-A 102013013476, der EP-B 1 413 858, der EP-B 892 251, der US-A 60 03 384, der US-A 60 47 457, der US-A 2003/0019308, der US-A 2009/0013798, der US-A 20100031755, der US-A 2010/0139390, der US-A 2011/0120229, der US-A 2011/0303006, der US-A 2012/0227496, der US-A 2015/0268082, der US-A 2015/0338252, der US-A 2016/0069717, der US-A 2016/0216145 oder der WO-A 2016/034417 beschrieben.

Demnach ist ein Meßrohr der in Rede stehenden Art mittels eines röhrenförmigen - zumeist metallischen und/oder zumindest abschnittsweise hohlzylindrischen - Grundkörper mit einer Wandung und einem davon umhüllten, beispielsweise zylinderförmigen, Lumen, das dafür eingerichtet ist, den Meßstoff zu führen sowie mittels eines auf einer äußeren, nämlich dem Lumen abgewandten - beispielsweise zumindest abschnittsweise planaren und/oder zumindest abschnittsweise gewölbten - Mantelfläche der Wandung des Grundkörpers angeordnete und stoffschlüssig damit verbundene Sensorhalterung für den Sensor. Der jeweilige Sensor kann - wie u.a. auch in den vorgenannten US-A 60 03 384, US-A 2011/0303006, DE-A 10 2013 114 382, DE-A 10 2013 114 483 bzw. EP-B 892 251 jeweils gezeigt - beispielsweise als eigenständige, nämlich die die Wandlung der physikalischen Meßgröße in das Sensorsignal vollumfänglich bewerkstelligende, ggf. auch zumindest teilweise in das Lumen des Grundkörpers hineinragende, Sonde ausgebildet sein; der Sensor kann aber beispielsweise auch, wie u.a. auch in der EP-B 1 413 858, der US-A 2011/0120229, der US-A 2016/0216145 oder der US-A 2016/0069717 jeweils gezeigt, ein mittels entlang des Meßrohrs verteilt positionierten, ggf. auch teilweise in das Lumen des Grundkörpers hineinragende Einzelkomponenten gebildetes, komplexes Sensorsystem sein.

Die - typischerweise metallische bzw. aus gleichem Material wie Wandung des Grundkörpers bestehende - Sensorhalterung ist dafür eingerichtet, mit wenigstens einer Sensorkomponente des jeweiligen Sensors, beispielsweise auch wieder lösbar, mechanisch verbunden zu werden. Sie kann dafür z.B. als ein ggf. auch die jeweilige Sensorkomponente teilweise umhüllender Anschlußstutzen oder als eine Anschluß- und/oder Montagefläche für die wenigstens eine Sensorkomponente bereitstellendes Podest ausgebildet sein. Für den vorgenannten Fall, daß es sich bei dem Meßgerät um ein Ultraschall-Durchflußmeßgerät handelt, kann die Sensorhalterung beispielsweise auch als Koppelelement für einen Ultraschallwandler dienen; im Falle eines als Wirbel-Durchflußmeßgerät ausgebildeten Meßgerät kann die mit der Sensorhalterung verbundene Komponente des Sensors ein eine in das Lumen hineinragende Sensorfahne haltender, ggf. scheibenförmiger bzw. membranartiger Verformungskörper sein.

Zum Verbinden von Sensorhalterung und Sensorkomponente weist die Sensorhalterung typischerweise jeweils eine - zumeist planare - Anschluß- und/oder Montagefläche für die wenigstens eine Sensorkomponente auf, die zu einer jeweils korrespondierenden Anschluß- bzw. Montagefläche der jeweiligen Sensorkomponente komplementär geformt ist. Im Ergebnis können sowohl eine Kontur der Sensorhalterung als auch deren jeweilige Anschluß- bzw. Montagefläche von der Mantelfläche der Wandung des Grundkörpers deutlich abweichen. Zwecks Bereitstellung der Sensorhalterung bzw. deren jeweiliger Anschluß- bzw. Montagefläche kann, wie u.a. in der US-A 2016/0069717 oder auch der US-A 60 03 384 gezeigt, in der Wandung des Grundkörpers eine entsprechende, beispielsweise durch ein Urformenverfahren in-situ oder ein subtraktives, nämlich Material abtragendes Herstellungsverfahren geformte, Ausnehmung vorgesehen sein. Alternativ oder in Ergänzung kann beispielsweise ein mit dem Grundkörper stoffschlüssig verbundener, beispielsweise nämlich daran angeschweißter, Anschlußstutzen die jeweilige Anschluß- bzw. Montagefläche bereitstellen.

Bauprinzip bedingt ist eine jeweilige Größe der Anschluß- bzw. Montagefläche durch eine jeweilige Größe eines Querschnitts des Grundkörpers sowie eine Stärke von dessen Wandung limitiert. Darüberhinaus können sich bei stoffschlüssiger Verbindung von Sensorhalterung und Grundkörper gelegentlich aufwendig herzustellende Schweißgeometrien bzw. -nähte ergeben, einhergehend mit entsprechend hohen Herstellkosten für das jeweilige Meßrohr. US 2016/202101 A1 offenbart ein Messrohr wobei eine nicht metallische Isolierschicht auf der Mantelfläche des Grundkörpers des Messrohrs durch ein additives Fertigungsverfahren genereiert ist.

Ausgehend vom vorbezeichneten Stand der Technik besteht eine Aufgabe der Erfindung darin, ein Meßrohr anzugeben, bei dem die Sensorhalterung auf einfache Weise an den Grundkörper angebracht ist und bei dem die Sensorhalterung, nicht zuletzt aber auch die dadurch bereitgestellte Anschluß- bzw. Montagefläche, weitgehend unabhängig von Form und Größe des Grundkörpers des Meßrohrs gestaltet und dimensioniert werden kann.

Zur Lösung der Aufgabe besteht die Erfindung in einem Meßrohr für ein Meßgerät, beispielsweise nämlich für ein Durchfluß-Meßgerät, welches, beispielsweise zumindest abschnittsweise hohlzylindrische, Meßrohr umfaßt: einen röhrenförmigen, metallischen insbesondere zumindest abschnittsweise hohlzylindrischen, Grundkörper mit einer Wandung und einem davon umhüllten, beispielsweise zylinderförmigen, Lumen, das dafür eingerichtet ist, einen fluiden Meßstoff zu führen; sowie eine auf einer äußeren, nämlich dem Lumen abgewandten, beispielsweise zumindest abschnittsweise gewölbten, Mantelfläche der Wandung des Grundkörpers angeordnete und stoffschlüssig damit verbundene, metallische insbesondere als Anschlußstutzen ausgebildete, Sensorhalterung, die dafür eingerichtet ist, zumindest mit wenigstens einer Sensorkomponente, nämlich einer Komponenten eines dem Erfassen wenigstens einer Meßgröße eines im Lumen befindlichen Meßstoffs dienlichen Sensors, beispielsweise wieder lösbar, mechanisch verbunden zu werden. Die Sensorhalterung des erfindungsgemäßen Meßrohrs ist zumindest anteilig durch ein additives Fertigungsverfahren, beispielsweise ein Freiraumverfahren und/oder ein Pulverbettverfahren, unmittelbar auf der Mantelfläche der Wandung des, beispielsweise zuvor in einem Urfomverfahren hergestellten, Grundkörpers hergestellt.

Darüberhinaus besteht die Erfindung in einem Meßgerät, beispielsweise einem Durchfluß-Meßgerät, zum Messen wenigstens einer Meßgröße eines, beispielsweise strömenden, Fluids, welches Meßgerät umfaßt: das vorbezeichnete erfindungsgemäße Meßrohr; einen an nämlichem Meßrohr befestigten, beispielsweise zumindest teilweise in das Lumen des Grundkörpers hineinragenden, Sensor zum Erfassen wenigstens einer Meßgröße eines im Lumen des Meßrohrs befindlichen Meßstoffs und zum Erzeugen eines nämliche Meßgröße repräsentierenden Sensorsignals, von welchem Sensor zumindest eine Komponente mit der Sensorhalterung, beispielsweise wieder lösbar, mechanisch verbunden ist; sowie eine mit dem Sensor elektrisch verbundene, beispielsweise mittels wenigstens eines Mikroprozessors gebildete, Meßelektronik, die dafür eingerichtet ist, das wenigstens eine Sensorsignal zu empfangen und zu verarbeiten, beispielsweise nämlich basierend auf dem wenigstens einen Sensorsignal Meßwerte für die wenigstens eine Meßgröße zu ermitteln.

Darüberhinaus besteht die Erfindung auch in einem Verfahren zum Herstellen eines Meßrohrs für ein Meßgerät, welches Verfahren umfaßt:
- Bereitstellen eines röhrenförmigen, beispielsweise zumindest abschnittsweise hohlzylindrischen, Grundkörpers mit einer metallischen Wandung und einem davon umhüllten, beispielsweise zylinderförmigen, Lumen;
- Auftragen von verflüssigtem Metall, auf eine äußere nämlich dem Lumen abgewandte, beispielsweise zumindest abschnittsweise gewölbte, Mantelfläche der Wandung des Grundkörpers;
- sowie Erstarrenlassen von auf der äußeren Mantelfläche appliziertem flüssigem Metall zum Bilden eines mit der Wandung des Grundkörpers stoffschlüssig verbundenen Teilstücks einer Sensorhalterung für einen dem Erfassen wenigstens einer Meßgröße eines im Lumen befindlichen, beispielsweise fluiden, Meßstoffs dienlichen Sensor, welche Sensorhalterung dafür vorgesehen bzw. eingerichtet ist, zumindest mit wenigstens einer Sensorkomponente, nämlich einer Komponente des Sensors, beispielsweise wieder lösbar, mechanisch verbunden zu werden.

Nach einer ersten Ausgestaltung des Meßohrs der Erfindung ist ferner vorgesehen, daß der Grundkörper mittels eines, beispielsweise gegossenen, gepressten oder geschweißten, Rohrs, beispielsweise eines Stahlrohrs oder eines Edelstahlrohrs, gebildet ist.

Nach einer zweiten Ausgestaltung des Meßohrs der Erfindung ist ferner vorgesehen, daß die Sensorhalterung als, beispielsweise hohlzylindrischer und/oder planare Anschluß- und/oder Montagefläche für die wenigstens eine Sensorkomponente aufweisender, Anschlußstutzen ausgebildet ist.

Nach einer dritten Ausgestaltung des Meßohrs der Erfindung ist ferner vorgesehen, daß die Sensorhalterung als ein, beispielsweise eine planare Anschluß- und/oder Montagefläche für die wenigstens eine Sensorkomponente aufweisendes, Podest ausgebildet ist.

Nach einer vierten Ausgestaltung des Meßohrs der Erfindung ist ferner vorgesehen, daß der Grundkörper durch ein Urformverfahren, beispielsweise ein Gießverfahren, und/oder durch ein Umformverfahren, beispielsweise ein Strangpreßverfahren, hergestellt ist.

Nach einer fünften Ausgestaltung des Meßohrs der Erfindung ist ferner vorgesehen, daß die Sensorhalterung nach der Herstellung des Grundkörpers hergestellt ist.

Nach einer sechsten Ausgestaltung des Meßohrs der Erfindung ist ferner vorgesehen, daß die Sensorhalterung wenigstens eine, beispielsweise durch ein subtraktives, nämlich materialabtragendes Fertigungsverfahren hergestellte, planare Oberfläche aufweist.

Nach einer siebenten Ausgestaltung des Meßohrs der Erfindung ist ferner vorgesehen, daß die Sensorhalterung wenigstens eine, beispielsweise planare, Oberfläche aufweist, die durch ein subtraktives, nämlich materialabtragendes Fertigungsverfahren, beispielsweise Fräsen und/oder Erodieren, hergestellt ist.

Erfindungsgemäß ist ferner vorgesehen, daß die Wandung des Grundkörpers und die Sensorhalterung jeweils aus Metall, beispielsweise einer Nickelbasislegierung, bestehen.

Nach einer elften Ausgestaltung des Meßohrs der Erfindung ist ferner vorgesehen, daß die Sensorhalterung zumindest anteilig durch wenigstens eines der folgenden additiven Fertigungsverfahren hergestellt ist:
- selektives Laserschmelzen (SLM);
- selektives Lasersintern (SLS);
- Elektronenstrahlschmelzen (Electron Beam Melting = EBM).

Nach einer zwölften Ausgestaltung des Meßohrs der Erfindung ist ferner vorgesehen, daß das Meßrohr zumindest abschnittsweise gekrümmt ist

Nach einer dreizehnten Ausgestaltung des Meßohrs der Erfindung ist ferner vorgesehen, daß das Meßrohr zumindest abschnittsweise gerade ist.

Nach einer vierzehnten Ausgestaltung des Meßohrs der Erfindung ist ferner vorgesehen, daß die Sensorhalterung zumindest anteilig durch wenigstens eines der folgenden additiven Fertigungsverfahren hergestellt ist:
- Auftragschweißen (Cladding);
- Metall-Pulver-Auftragsverfahren (MPA);
- Kaltgasspritzen;
- Elektronenstrahlschweißen (Electron Beam Welding = EBW).

Nach einer fünfzehnten Ausgestaltung des Meßohrs der Erfindung ist ferner ein, beispielsweise als Durchgangsbohrung ausgebildeter, Durchgangskanal vorgesehen, der sich teilweise durch die Sensorhalterung und teilweise durch die Wandung des Grundkörpers erstreckt.

Nach einer sechzehnten Ausgestaltung des Meßohrs der Erfindung ist ferner zumindest ein, beispielsweise als Sacklochbohrung ausgebildetes, Sackloch mit einem offenen Ende und mit einem geschlossenen Ende vorgesehen, welches Sackloch sich teilweise durch die Sensorhalterung und teilweise durch die Rohrwand erstreckt, derart, daß das offene Ende in der Sensorhalterung und das geschlossene Ende innerhalb der Wandung des Grundkörpers verortet sind.

Nach einer siebzehnten Ausgestaltung des Meßohrs der Erfindung ist ferner vorgesehen, daß das Meßrohr dafür eingerichtet ist vibrieren gelassen zu werden.

Nach einer ersten Ausgestaltung des Meßgeräts der Erfindung handelt es sich dabei um ein Durchflußmeßgerät, beispielsweise ein Wirbel-Durchflußmeßgerät, ein Ultraschall-Durchflußmeßgerät, ein Coriolis-Durchflußmeßgerät, ein vibronisches Dichte- und/oder Viskositäts-Meßgerät, ein thermisches Durchflußmeßgerät, oder ein magnetisch-induktives Durchflußmeßgerät.

Nach einer zweiten Ausgestaltung des Meßgeräts der Erfindung handelt es sich dabei um ein Ultraschall-Durchflußmeßgerät, wobei die Sensorhalterung als Koppelelement für einen Ultraschallwandler dient.

Nach einer dritten Ausgestaltung des Meßgeräts der Erfindung handelt es sich dabei um ein Wirbel-Durchflußmeßgerät, wobei die mit der Sensorhalterung verbundene Komponente des Sensors ein eine in das Lumen hineinragende Sensorfahne haltender, beispielsweise scheibenförmiger bzw. membranartiger, Verformungskörper ist.

Nach einer vierten Ausgestaltung des Meßgeräts der Erfindung handelt es sich dabei um ein Coriolis-Massendurchflußmeßgerät und/oder um ein vibronisches Dichte- und/oder Viskositäts-Meßgerät, wobei die mit der Sensorhalterung verbundene Komponente des Sensors eine Spule ist oder wobei die mit der Sensorhalterung verbundene Komponente des Sensors ein, beispielsweise becherförmiger, Permanentmagnet ist.

Nach einer fünften Ausgestaltung des Meßgeräts der Erfindung handelt es sich dabei um ein Temperatur-Meßgerät.

Nach einer sechsten Ausgestaltung des Meßgeräts der Erfindung handelt es sich dabei um ein pH-Wert-Meßgerät.

Nach einer siebenten Ausgestaltung des Meßgeräts der Erfindung handelt es sich dabei um ein Druck-Meßgerät.

Nach einer ersten Weiterbildung des Verfahrens der Erfindung umfaßt dieses weiters einen Schritt des Auftragens von verflüssigtem Metall, auf eine äußere nämlich dem Lumen abgewandten Fläche eines zuvor gebildeten Teilstücks der Sensorhalterung sowie einen Schritt des Erstarrenlassens von auf nämlicher äußeren Fläche des zuvor gebildeten Teilstücks appliziertem flüssigem Metall zum Vergrößern nämlichen Teilstücks bzw. zum Bilden eines weiteren Teilstücks der Sensorhalterung.

Nach einer zweiten Weiterbildung des Verfahrens der Erfindung umfaßt dieses weiters einen Schritt des Abtragens von überschüssigen Material aus einem zuvor gebildeten Teilstück der Sensorhalterung.

Nach einer dritten Weiterbildung des Verfahrens der Erfindung umfaßt dieses weiters einen Schritt des Ausbildens, beispielsweise nämlich des Ausbohrens und/oder des Ausfräsens, eines sich teilweise durch die Sensorhalterung und teilweise durch die Rohrwand erstreckenden Durchgangskanals.

Nach einer vierten Weiterbildung des Verfahrens der Erfindung umfaßt dieses weiters einen Schritt des Ausbildens, beispielsweise nämlich des Ausbohrens und/oder Ausfräsens, eines sich teilweise durch die Sensorhalterung und teilweise durch die Rohrwand erstreckenden Sacklochs mit einem offenen Ende und mit einem geschlossenen Ende, derart, daß das offene Ende in der Sensorhalterung und das geschlossene Ende innerhalb der Wandung des Grundkörpers verortet sind.

Ein Grundgedanke der Erfindung besteht darin, den Herstellungsprozeß von Meßrohren der in Rede stehenden Art zu verbessern, daß auf einen geeigneten, beispielsweise auch konventionellen bzw. kostengünstig zu fertigenden, Grundkörper eine hinsichtlich Form und Größe optimal an den jeweiligen Sensor bzw. dessen Funktionsweise angepaßte Sensorhalterung in einem automatisierten, gleichwohl überwiegend oder sogar ausschließlich universelle Betriebsmittel einsetzenden, insb. nämlich auch ohne Gußformen bzw. Druckgußformen auskommenden, Prozeßschritt nachträglich angetragen wird.

Die Erfindung sowie vorteilhafte Ausgestaltungen davon werden nachfolgend anhand von Ausführungsbeispielen näher erläutert, die in den Figuren der Zeichnung dargestellt sind. Gleiche bzw. gleichwirkende oder gleichartig fungierende Teile sind in allen Figuren mit denselben Bezugszeichen versehen; wenn es die Übersichtlichkeit erfordert oder es anderweitig sinnvoll erscheint, wird auf bereits erwähnte Bezugszeichen in nachfolgenden Figuren verzichtet. Weitere vorteilhafte Ausgestaltungen oder Weiterbildungen, insb. auch Kombinationen zunächst nur einzeln erläuterter Teilaspekte der Erfindung, ergeben sich ferner aus den Figuren der Zeichnung und/oder aus den Ansprüchen an sich.

Im einzelnen zeigen:
- Fig. 1: perspektivisch ein, beispielsweise als Durchfluß-Meßgerät ausgebildetes, Meßgerät zum Messen wenigstens einer, ggf. auch zeitlich veränderlichen Meßgröße;
- Fig. 2: ein Meßgerät gemäß Fig. 1 in einer Seitenansicht;
- Fig. 3: in einer Seitenansicht ein als Meßgerät gemäß Fig. 1 geeignetes Wirbel-Durchflußmeßgerät;
- Fig. 4: das Wirbel-Durchflußmeßgerät gemäß Fig. 3 in einer geschnittenen Seitenansicht;
- Fig. 5: perspektivisch eine erste Variante eines für ein Meßgerät gemäß Fig. 1, beispielsweise auch für Wirbel-Durchflußmeßgerät gemäß Fig. 3, geeigneten Meßrohrs;
- Fig. 6: perspektivisch eine zweite Variante eines für ein, beispielsweise als ein Ultraschall-Durchflußmeßgerät oder auch als ein Temperatur-Meßgerät ausgebildetes, Meßgerät gemäß Fig. 1 geeigneten Meßrohrs;
- Fig. 7: perspektivisch eine dritte Variante eines für ein, beispielsweise auch als ein Ultraschall-Durchflußmeßgerät, als ein pH-Wert-Meßgerät, als ein Druck-Meßgerät oder beispielsweise auch als ein Temperatur-Meßgerät ausgebildetes, Meßgerät gemäß Fig. 1 geeigneten Meßrohrs; und
- Fig. 8: in einer geschnittenen Seitenansicht eine weitere Variante eines für ein Meßgerät gemäß Fig. 1 bzw. gemäß Fig. 3 geeigneten Meßrohrs.

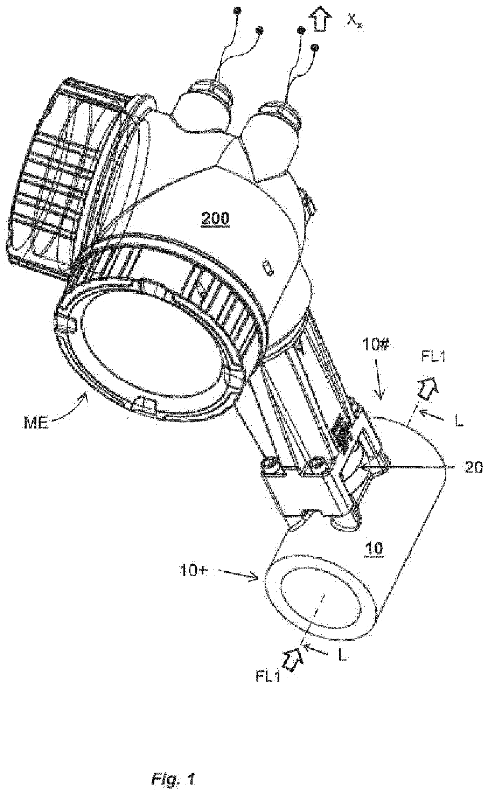

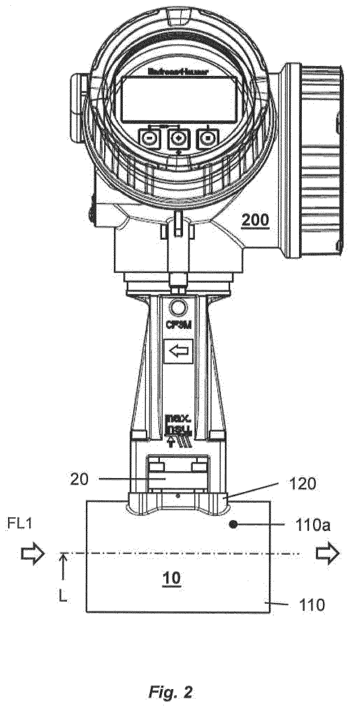

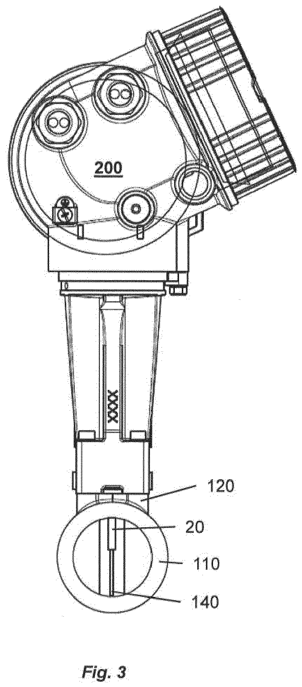

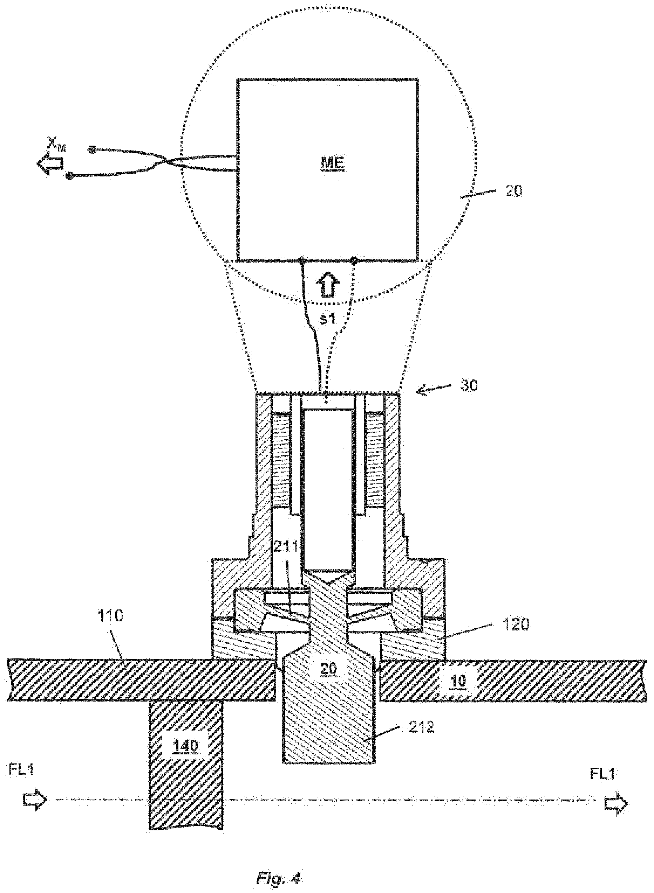

In Fig. 1 und 2 ist ein Ausführungsbeispiel für ein Meßgerät zum Messen wenigstens einer, ggf. auch zeitlich veränderlichen Meßgröße, wie z.B. einer Strömungsgeschwindigkeit v, einer Volumendurchflußrate V`, einer Massendurchflußrate, einer Temperatur, eines Drucks oder eines ph-Werts, eines in einer Rohrleitung strömenden fluiden Meßstoffs FL1, beispielsweise eines Gases oder einer Flüssigkeit, gezeigt. Bei dem Meßgerät kann es sich demnach beispielsweise um ein Durchflußmeßgerät, beispielsweise nämlich ein Ultraschall-Durchflußmeßgerät, ein vibronisches Dichte- und/oder Viskositäts-Meßgerät, ein (vibronisches) Coriolis-Durchflußmeßgerät, ein thermisches Durchflußmeßgerät, ein magnetisch-induktives Durchflußmeßgerät oder, wie auch in Fig. 3 bzw. 4 gezeigt, ein Wirbel-Durchflußmeßgerät, handeln; das Meßgerät kann aber beispielsweise auch ein Temperatur-Meßgerät, ein pH-Wert-Meßgerät oder auch ein Druck-Meßgerät sein. Die Rohrleitung wiederum kann beispielsweise als Anlagenkomponente eines verfahrenstechnischen Prozesses, eines Wasser- oder eines Wärmeversorgungsnetzes, eines Turbinenkreislaufes, einer Erd- oder Biogasanlage, eines Gasversorgungsnetzes, einer Verladestation für petrochemische Stoffe oder dergleichen ausgebildet, mithin kann das Fluid beispielsweise auch Trinkwasser, Wasserdampf, Erdöl oder beispielsweise auch ein (komprimiertes) Erdgas oder Biogas sein.

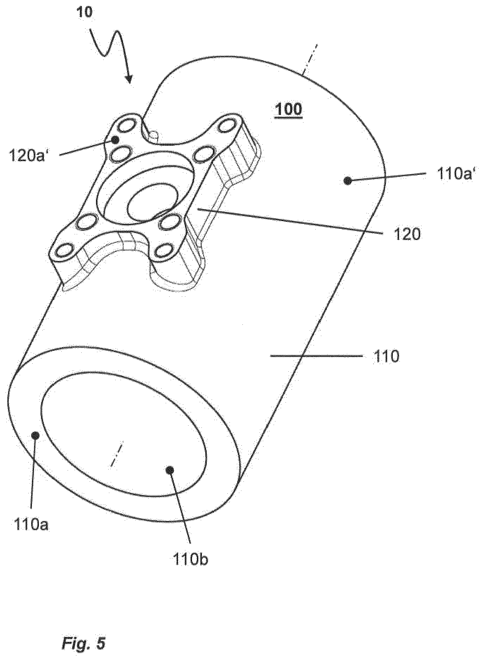

Das Meßgerät weist ein - hier zumindest abschnittsweise hohlzylindrisches - Meßrohr 10, von dem verschiedene Ausführungsvarianten in Fig. 5, 6 bzw. 7 dargestellt sind, sowie einen an nämlichem Meßrohr 10 befestigten Sensor 20 auf.

Das Meßrohr 10 ist, wie auch in Fig. 1 gezeigt bzw. auch aus einer Zusammenschau der Fig. 1 und 5 ohne weiteres ersichtlich, mittels eines röhrenförmigen - beispielsweise metallischen und/oder zumindest abschnittsweise hohlzylindrischen - Grundkörpers 110 mit einer Wandung 110a und einem davon umhüllten - beispielsweise nämlich zylinderförmigen - dem Führen des jeweiligen fluiden Meßstoffs dienlichen Lumen 110b sowie einer auf einer äußeren, nämlich dem Lumen abgewandten - auch zumindest abschnittsweise gewölbten - Mantelfläche 110a' der Wandung 110a des Grundkörpers 110 angeordneten Sensorhalterung 120 gebildet. Nicht zuletzt für den vorbezeichneten Fall, daß es sich bei dem Meßgerät um ein vibronisches Durchflußmeßgerät, beispielsweise nämlich ein vibronisches Dichte- und/oder Viskositäts-Meßgerät bzw. um ein vibronisches Coriolis-Durchflußmeßgerät handelt, ist das Meßrohr nach einer weiteren Ausgestaltung der Erfindung dafür eingerichtet vibrieren gelassen zu werden, beispielsweise während es vom Meßstoff durchströmt ist.

Der Grundkörper 110 bzw. das damit gebildete Meßrohr 10 erstreckt sich von einem Einlaßende 10+ bis zu einem Auslaßende 10# und ist im besonderen dafür vorgesehen, in den Verlauf der vorbezeichneten Rohrleitung unter Bildung eines durchgängigen Strömungspfades eingesetzt zu werden. Am Einlaßende 10+ wie auch am Auslaßende 10# kann dementsprechend zudem jeweils ein dem Herstellen einer leckfreien Flanschverbindung mit jeweils einem korrespondierenden Flansch an einem ein- bzw. auslaßseitig Leitunsgsegment der Rohrleitung dienender Flansch vorgesehen sein. Ferner kann der Grundkörper, wie auch in Fig. 1 bzw. 5 jeweils gezeigt, im wesentlichen gerade, beispielsweise nämlich als Hohlzylinder mit kreisförmigem Querschnitt ausgebildet sein, derart, daß im Ergebnis der Grundkörper 110 bzw. das damit gebildete Meßrohr 10 eine das Einlaßende und das Auslaßende imaginär verbindende gedachte gerade Längsachse L aufweist. Alternativ oder in Ergänzung kann der Grundkörper bzw. das damit gebildete Meßrohr aber auch zumindest abschnittsweise gekrümmt, beispielsweise nämlich im wesentlichen V-förmig oder U-förmig ausgebildet sein. Die Wandung des Grundkörpers 110 besteht nach einer Ausgestaltung der Erfindung aus einem Metall, beispielsweise einer Titan, Tantal und/oder Zirkonium enthaltenden Metalllegierung, einer Nickelbasislegierung oder etwa einem ggf. auch rostfreien Stahl. Der Grundkörper 110 kann dementsprechend beispielsweise mittels eines, insb. gegossenen, gepressten oder geschweißten, Rohrs, beispielsweise nämliche einem, ggf. auch nahtlosen Stahl- bzw. Edelstahlrohrs, gebildet sein. Der Grundkörper kann zudem durch ein Urformverfahren, wie etwa ein Gießverfahren, und/oder durch ein Umformverfahren, wie z.B. ein Strangpreßverfahren, hergestellt sein.

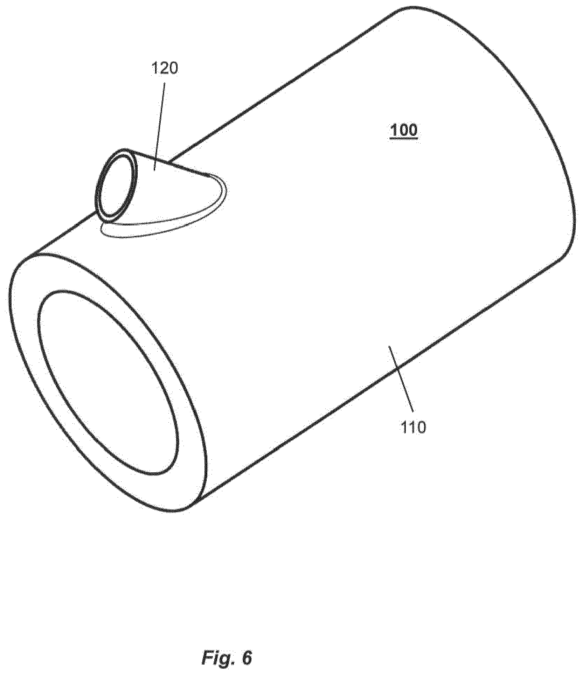

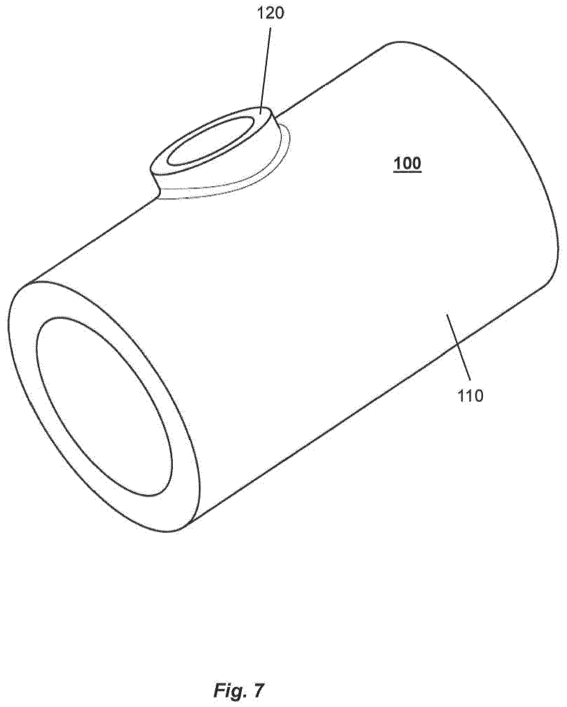

Die Sensorhalterung 120 des erfindungsgemäßen Meßohrs 10 bzw. des damit gebildeten Meßgeräts ist stoffschlüssig mit der Wandung 110a des Grundkörpers 110 verbunden und im besonderen dafür vorgesehen bzw. eingerichtet, zumindest mit wenigstens einer Sensorkomponente, nämlich einer Komponenten des Sensors 20, insb. wieder lösbar, mechanisch verbunden zu werden. Dafür kann die Sensorhalterung 120, wie auch in Fig. 5 dargestellt, beispielsweise als, insb. massives, Podest oder, wie auch in Fig. 6 bzw. 7 jeweils angedeutet, beispielsweise als ein, insb. hohlzylindrischer, Anschlußstutzen ausgebildet sein. Zum Positionieren und Befestigen des Sensors 20 an der Sensorhalterung 120 weist diese nach einer weiteren Ausgestaltung der Erfindung eine, insb. planare, also ebene und/oder zu einer korrespondierenden Anschlußfläche des Sensors komplementäre, Anschluß- und/oder Montagefläche 120a` für die wenigstens eine Sensorkomponente auf. Nämliche Anschluß- und/oder Montagefläche 120a' kann ferner zumindest teilweise als eine Dichtfläche ausgebildet sein, die dafür eingerichtet ist, im Zusammenspiel mit einer korrespondierenden Dichtefläche der vorbezeichneten Sensorkomponente des Sensors 20 eine innige, insb. auch fluiddichte bzw. leckagefreie, Verbindung von Sensor 20 und Sensorhalterung 120 zu ermöglichen, ggf. auch unter Zwischenlage eines entsprechenden Dichtelements, wie etwa einer ringförmigen oder ringscheibenförmigen Dichtung. Nach einer weiteren Ausgestaltung der Erfindung besteht die Sensorhalterung 120 aus einem Metall, beispielsweise INCONEL^{®}718 oder einer anderen Nickelbasislegierung, und/oder einem zumindest hinsichtlich seiner chemischen Zusammensetzung gleichen Material wie die Wandung des Grundkörpers. Beispielsweise können die Wandung 110 und die Sensorhalterung 120 aus einer gleichen Metalllegierung hergestellt sein. Ferner kann der Sensor 20 beispielsweise auch durch stoffschlüssiges Verbinden, insb. nämlich durch Verschweißen oder Verlöten, von Sensorhalterung und zugehöriger Sensorkomponente am Meßrohr fixiert sein; er kann aber beispielsweise auch mit der Sensorhalterung lösbar verbundenen, beispielsweise nämlich ver- bzw. angeschraubt sein.

Der Sensor 20 des erfindungsgemäßen Meßgeräts ist im besonderen dafür vorgesehen bzw. eingerichtet, die wenigstens einen Meßgröße des im Lumen des Meßrohrs 10 befindlichen Meßstoffs zu erfassen sowie ein nämliche Meßgröße repräsentierendes Sensorsignal s1 zu erzeugen. Der Sensor 20 und das Meßrohr 10 können dafür beispielsweise so ausgestaltet sein, daß der Sensor 20 lediglich außen am Meßrohr angebracht ist, gleichwohl nicht in das Lumen hineinragt bzw. daß der Sensor 20 die Meßgröße durch die Wandung 110a des Grundkörpers hindurch erfaßt; Sensor 20 und Meßrohr 10 können aber beispielsweise auch so ausgestaltet sein, daß der Sensor 20, wie auch in Fig. 4 angedeutet, von außen durch einen sich teilweise durch die Sensorhalterung 120 und teilweise durch die Rohrwand erstreckenden Durchgangskanal 3" - nämlich eine in die Sensorhalterung 120 sowie die Wandung 110 eingeformte bzw. als Durchgangsbohrung ausgebildet durchgehende Öffnung - hindurch in das Lumen des Grundkörpers 110 bzw. des Meßrohrs eingeführt sein. Insbesondere kann der Sensor 20 dabei so in den Durchgangskanal 3"eingesetzt sein, daß die Sensorkomponente diesen überdeckt bzw. hermetisch verschließt. In einem dem Sensor 20 zugewandte Endbereich des Durchgangskanals 3" kann in der Sensorhalterung eine die Sensorkomponente zumindest teilweise aufnehmende, nämlich auch seitlich umgreifende Fassung 3a ausgebildet sein. Der Durchgangskanal kann beispielsweise durch entsprechendes Ausbohren und/oder Ausfräsen von Material aus der Wandung 110 und der Sensorhalterung 120 hergestellt bzw. so ausgebildet sein, daß er einen (Innen-) Durchmesser aufweist, der in einem Bereich zwischen 10 mm und ca. 50 mm liegt.

Wie aus der Zusammenschau der Fig. 1, 2, 3 und 4 ersichtlich, umfaßt das Meßgerät desweiteren eine - beispielsweise in einem druck- und/oder schlagfesten Schutzgehäuse 200 untergebrachte und/oder mittels wenigstens eines Mikroprozessors gebildete - Meßelektronik ME, die mit dem Sensor elektrisch verbunden und dafür eingerichtet ist, das wenigstens eine Sensorsignal zu empfangen und zu verarbeiten, beispielsweise nämlich basierend auf dem wenigstens einen Sensorsignal wiederkehrend Meßwerte X_{M} für die wenigstens eine Meßgröße zu ermitteln. Mittels der Meßelektronik ME generierte Meßwerte X_{M} können beispielsweise vor Ort visualisiert und/oderdrahtgebunden via angeschlossenen Feldbus und/oder drahtlos per Funk - an ein elektronisches Datenverarbeitungssystem, etwa eine Speicherprogrammierbare Steuerung (SPS) und/oder einen Prozeßleitstand, übermittelt werden. Das Schutzgehäuse 200 für die Meßelektronik ME kann beispielsweise aus einem Metall, etwa einem Edelstahl oder Aluminium, und/oder mittels eines Gießverfahrens, wie z.B. einem Feinguß- oder einem Druckgußverfahren (HPDC), hergestellt sein; es kann aber beispielsweise auch mittels eines in einem Spritzgießverfahren hergestellten Kunststoffformteils gebildet sein. In dem in den Fig. 1 - 4 jeweils gezeigten Ausführungsbeispielen ist das Meßgrät zudem als ein Meßgerät in Kompaktbauweise ausgebildet, bei dem also das Schutzgehäuse 200 mit darin angeordneter Meßelektronik ME am Meßrohr gehaltert ist, beispielsweise nämlich mittels eines halsförmigen, hier ebenfalls an der Sensorhalterung 120 wieder lösbar fixierten und zudem auch Komponenten des Sensors umhüllenden Anschlußstutzens 30.

Bei dem Meßgerät kann es sich, wie erwähnt bzw. wie auch in Fig. 3 bzw. 4 angedeutet, beispielsweise um ein Wirbel-Durchflußmeßgerät, mithin um ein solches Meßgerät handeln, bei dem der Sensor 20 dafür vorgesehen bzw. ausgestaltet ist, mit einer Strömungsgeschwindigkeit bzw. einer Volumendurchflußrate korrespondierende Druckschwankungen im durch das Meßrohr strömenden Meßstoff zu erfassen und bei dem das Sensorsignal s1 von nämlichen Druckschwankungen abhängig ist. Die mit der Sensorhalterung verbundene Komponente des Sensors 20 kann für diesen Fall beispielsweise ein eine in das Lumen hineinragende Sensorfahne 212 haltender, insb. scheibenförmiger bzw. membranartiger, Verformungskörper 211 sein. Verformungskörper 211 und Sensorfahne 212 können hier beispielsweise Bestandteile ein und desselben monolithischen Formteils sein, das beispielsweise in einem Urformverfahren hergestellt ist; Verformungskörper und Sensorfahne können aber auch als zunächst voneinander getrennte bzw. erst nachträglich stoffschlüssig miteinander verbundene, beispielsweise nämlich miteinander verschweißte bzw. verlötete, Einzelteile ausgebildet, mithin aus entsprechend stoffschlüssig miteinander verbindbaren Materialien hergestellt sein. Der Verformungskörper 211 kann, wie bei derartigen Sensoren durchaus üblich, zumindest anteilig, beispielsweise nämlich überwiegend oder vollständig, aus einem Metall, wie z.B. Edelstahl bzw. einer Nickelbasislegierung, bestehen. Ebenso kann auch die Sensorfahne 212 zumindest anteilig aus einem Metall, beispielsweisenämlich einem Edelstahl bzw. einer Nickelbasislegierung, bestehen; insbesondere können Verformungskörper und Sensorfahne auch aus dem gleichen Material hergestellt werden. Zum Erzeugen der vorbezeichneten Druckschwankungen kann, wie auch in wie auch in Fig. 3 und 4 angedeutet bzw. aus deren Zusammenschau ersichtlich, im Lumen des Grundkörpers 110 bzw. des Meßrohrs - hier nämlich stromaufwärts des Sensors 20 - ferner ein dem Bewirken einer Kärmänsche Wirbelstrasse im strömenden Fluid dienlicher Stauköper 140 vorgesehen sein, wobei Sensor und Staukörper hier so dimensioniert und angeordnet sind, daß die Sensorfahne 112 in einen solchen Bereich in das Lumen 110* bzw. den darin geführte Meßstoff FL1 hineinragt, der im Betrieb des Meßsystems der vorbezeichneten Kármánschen Wirbelstrasse eingenommen wird, so daß die mittels des Sensors 20 erfaßten Druckschwankungen durch am Staukörper 4 mit einer von der Strömungsgeschwindigkeit bzw. Volumendurchflußrate abhängige Ablösrate (~ 1/f_{Vtx}) abgelöste gegenläufige Wirbel verursachte periodische Druckschwankungen sind und das Sensorsignal s1 eine mit der Ablöserate nämlicher Wirbel korrespondierende Signalfrequenz (~ f_{Vtx}) aufweist.

Zum Generieren des Sensorsignals s1 umfaßt der Sensor 20 ferner wenigstens ein physikalisch-elektrisches Wandelerelement. Nämliches Wandelerelement kann bei dem in Fig. 4 gezeigten Ausführungsbeispiel als ein Bewegungen der Sensorfahne bzw. gleichermaßen zeitlich ändernde Verformungen des Verformungskörpers in eine veränderliche elektrische Spannung konvertierender piezoelektrisches oder kapazitives Wandlerelement ausgebildet sein. Für den anderen erwähnten Fall, daß es sich bei dem Meßgerät um ein Ultraschall-Durchflußmeßgerät handelt, kann das Wandelerelement beispielsweise ein piezoelektrischer Ultraschallwandler sein bzw. kann die Sensorhalterung beispielsweise auch als ein Koppelelement für einen solchen Ultraschallwandler nämlichen Ultraschall-Durchflußmeßgeräts dienen. Für den ebenfalls erwähnten Fall, daß es sich bei Meßgerät es sich um ein vibronisches Durchfluß-Meßgerät, beispielsweise ein Coriolis-Massendurchflußmeßgerät und/oder um ein vibronisches Dichte-Meßgerät handelt, kann die mit der Sensorhalterung verbundene Komponente des Sensors beispielsweise eine Spule oder beispielsweise auch ein, insb. becherförmiger, Permanentmagnet sein.

Beim erfindungsgemäßen Meßrohr 10 bzw. dem damit gebildeten erfindungsgemäßen Meßgerät ist die Sensorhalterung 120 zumindest anteilig durch ein additives Fertigungsverfahren unmittelbar auf der Mantelfläche der Wandung des, beispielsweise zuvor in einem Urfomverfahren und/oder einem Umformverfahren hergestellten, Grundkörpers 110 hergestellt. Dementsprechend ist also die Sensorhalterung erst nach dem Grundkörper und zwar in situ auf nämlichem Grundkörper hergestellt. Bei dem zur Herstellung der Sensorhalterung angewendeten additiven Fertigungsverfahren kann es sich beispielsweise um ein sogenanntes Freiraumverfahren, wie z.B. ein Auftragschweiß-Verfahren (Cladding), ein Metall-Pulver-Auftragsverfahren (MPA), ein Elektronenstrahlschweiß-Verfahren (Electron Beam Welding = EBW) oder ein Kaltgasspritz-Verfahren, oder aber auch um ein sogenanntes Pulverbettverfahren, wie z.B. ein selektives Laserschmelzen (SLM), einselektives Lasersintern (SLS) oder ein Elektronenstrahlschmelzen (Electron Beam Melting = EBM), handeln.

Bei einem zum Herstellen des Meßrohrs bzw. dessen Sensorhalterung vorteilhaften additiven Verfahren wird zunächst der Grundkörper 110 bereitgestellt und hernach auf nämlichen Grundkörper 110 verflüssigtes Material, beispielsweise also eine verflüssigte Nickelbasislegierung oder ein anderes verflüssigtes Metall, auf eine äußere, nämlich dem Lumen abgewandte, ggf. auch zumindest abschnittsweise gewölbte Mantelfläche 110a' der Wandung 110a des Grundkörpers 110 aufgetragen. Zum Bilden eines mit der Wandung 110a des Grundkörpers 110 stoffschlüssig verbundenen Teilstücks der Sensorhalterung 120 wird auf der äußeren Mantelfläche 110a' appliziertes (noch) flüssiges Material dort dann wieder erstarren gelassen. Nach einer weiteren Ausgestaltung der Erfindung wird ferner auf eine äußere, nämlich dem Lumen abgewandten Fläche eines zuvor gebildeten Teilstücks der Sensorhalterung 120 erneut verflüssigtes Material aufgetragen und dort wiederum erstarren gelassen, um so nämliches Teilstück weiter zu vergrößern bzw. um so ein weiteres Teilstücks der Sensorhalterung zu bilden. Dieser Vorgang wird ggf. mehrfach wiederholt, beispielsweise so oft bis eine zuvor festgelegt gewünschte Form und Größe für die Sensorhalterung bzw. deren Teilstück hergestellt worden ist. Das hierbei verwendete Material kann jeweils immer das gleiche Material sein, beispielsweise nämlich auch das gleiche wie für das mit der Wandung des Grundkörpers unmittelbar verbundene Teilstück; falls erforderlich kann aber beispielsweise auch ein anderes Material als für das mit der Wandung des Grundkörpers unmittelbar verbundene Teilstück oder können auch verschiedene Materialien, ggf. auch abwechselnd für die Bildung der vorbezeichneten weiteren Teilstücke verwendet werden. Zur Bildung von Teilstücken der Sensorhalterung 120 kann der Grundkörper 110 während des Applizierens von verflüssigtem Material beispielsweise auch um die gedachte Längsachse L (hin- und her) verdreht und/oder translatorisch entlang nämlicher Längsachse vor- und zurück verfahren werden. Das dem Bilden der Sensorhalterung dienliche Applizieren von verflüssigtem Material auf die Wandung des Grundkörpers kann beispielsweise mittels einer Multi-Funktions-Maschine (DONE-in-One) durchgeführt werden, wie sie beispielsweise von der Fa. Yamazaki Mazak UK Ltd. unter der Warenbezeichnung "INTEGREX i-400" angeboten wird.

Nach eine weiteren Ausgestaltung der Erfindung weist die Sensorhalterung wenigstens eine Oberfläche auf, die durch ein subtraktives, nämlich materialabtragendes Fertigungsverfahren hergestellt ist, beispielsweise nämlich durch Fräsen und/oder Erodieren. Bei nämlicher, ggf. auch planaren Oberfläche kann es sich beispielsweise auch um die vorbezeichnete Anschluß- und/oder Montagefläche 120a` der Sensorhalterung 120 handeln. Dementsprechend kann das der Herstellung der Sensorhalterung dienliche erfindungsgemäße Herstellungsverfahren zudem auch ein Abtragen von überschüssigen Material aus einem zuvor gebildeten Teilstück der Sensorhalterung umfassen, beispielsweise dirket im Nachgang zur additiven Fertigung mittels der vorbezeichneten Multi-Funktions-Maschine ("INTEGREX i-400).

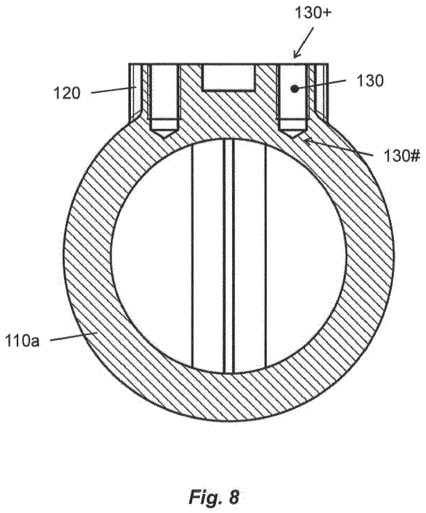

Zwecks Erhöhung einer mechanischen Festigkeit der Sensorhalterung und/oder einer die Sensorhalterung an der Wandung haltenden Verbindungskraft kann es von Vorteil sein, zusätzliche Verankerungsmittel am Meßrohr vorzusehen. Ein solches Verankerungsmittel kann beispielsweise ein Stehbolzen sein, der im Bereich der Sensorhalterung vor deren Herstellung auf mit der Wandung 110a fest verbunden, beispielsweise nämlich auf die Mantelfläche 110a' der Wandung 110a aufgeschweißt, wird und der schlußendlich in die hernach gebildeten Sensorhalterung eingebettet ist. Zur Erhöhung der vorbezeichneten, die Sensorhalterung an der Wandung haltenden Verbindungskraft kann nämlicher Stehbolzen an seiner die Sensorhalterung kontaktierenden Außenfläche zusätzlich auch Formschluß gebende Konturen, beispielsweise etwa eine oder mehrere Rillen und/oder ein Außengewinde und/oder einen Schraubenkopf, aufweisen. Alternativ oder in Ergänzung kann zur Erhöhung vorbezeichneter mechanischer Festigkeit bzw. vorbezeichneter Verbindungskraft beispielsweise aber auch ein mit der Wandung verschraubter bzw. in die Wandung eingeschraubter, beispielsweise als Gewindestange oder als Schraube ausgebildeter, Schraubbolzen vorgesehen sein. Nämlicher Schraubbolzen kann beispielsweise ebenfalls vor der Fertigung der Sensorhalterung in die Wandung eingeschraubt werden. Die Wandung 110a und die Sensorhalterung 120 können aber auch so ausgestaltet sein, daß nämlicher Schraubbolzen beispielsweise auch erst nach Fertigstellung der Sensorhalterung mit dem Meßrohr verbunden werden kann. Dafür ist nach einer weiteren Ausgestaltung beim erfindungsgemäßen Meßrohr zumindest ein, beispielsweise als Sacklochbohrung ausgebildetes, ein offenes Ende 130+ und ein geschlossenen Ende 130# aufweisendes Sackloch 130 vorgesehen, das sich teilweise durch die Sensorhalterung 120 und teilweise durch die Wandung 110a erstreckt, derart, daß - wie auch in Fig. 8 schematisch dargestellt - das Ende 130+ in der Sensorhalterung 120 und das Ende 130# innerhalb der Wandung 110a des Grundkörpers 110 verortet sind. Nämliches Sackloch 130 kann ferner ein entsprechendes, sich ausgehend vom Ende 130+ bis zu einem innerhalb der Wandung 110a liegenden Bereich des Sacklochs 130 erstreckendes Innengewinde aufweisen. Dementsprechend kann das der Herstellung der Sensorhalterung 120 dienliche erfindungsgemäße Herstellungsverfahren zudem auch ein Ausbilden, beispielsweise nämlich ein Ausbohren und/oder Ausfräsen, eines sich teilweise durch die Sensorhalterung und teilweise durch die Rohrwand erstreckenden Sacklochs 130 mit einem offenen Ende 130+ und mit einem geschlossenen Ende 130# umfassen, derart, daß das Ende 130+ in der Sensorhalterung und das Ende 130# innerhalb der Wandung 110a des Grundkörpers 110 verortet sind. Die Verwendung vorbezeichneter Verankerungsmittel, insb. des vorbezeichneten Stehbolzens und/oder des vorbezeichneten Schraubbolzens, hat u.a. auch den Vorteil, daß damit auf ansonsten nach der Herstellung des Meßrohrs ggf. erforderliche aufwendige Untersuchungen bzw. Prüfungen des Materialgefüges von Sensorhalterung 120, beispielsweise durch am fertigen Meßrohr durchzuführende Röntgen- oder Ultraschallmessungen, oder aufwendige Druckprüfungen des Meßrohrs ganz oder teilweise verzichtet werden kann.

## Patentansprüche

1. Meßrohr für ein Meßgerät, insb. für ein Durchfluß-Meßgerät, welches, insb. zumindest abschnittsweise hohlzylindrische, Meßrohr umfaßt:
- einen röhrenförmigen, insb. zumindest abschnittsweise hohlzylindrischen, Grundkörper (110) mit einer Wandung (110a) und einem davon umhüllten, insb. zylinderförmigen, Lumen (110b), das dafür eingerichtet ist, einen fluiden Meßstoff (FL1) zu führen;
- sowie eine auf einer äußeren, nämlich dem Lumen abgewandten, insb. zumindest abschnittsweise gewölbten, Mantelfläche (110a') der Wandung (110a) des Grundkörpers (110) angeordnete und stoffschlüssig damit verbundene, insb. als Anschlußstutzen ausgebildete, Sensorhalterung (120), die dafür eingerichtet ist, zumindest mit wenigstens einer Sensorkomponente, nämlich einer Komponenten eines dem Erfassen wenigstens einer Meßgröße eines im Lumen befindlichen Meßstoffs dienlichen Sensors, insb. wieder lösbar, mechanisch verbunden zu werden;
- wobei sowohl die Wandung des Grundkörpers als auch die Sensorhalterung aus Metall bestehen;
- und wobei die Sensorhalterung zumindest anteilig durch ein additives Fertigungsverfahren, insb. ein Freiraumverfahren und/oder ein Pulverbettverfahren, unmittelbar auf der Mantelfläche der Wandung des, insb. zuvor in einem Urfomverfahren hergestellten, Grundkörpers hergestellt ist.

2. Meßrohr nach einem der vorherigen Ansprüche,
- wobei der Grundkörper mittels eines, insb. gegossenen, gepressten oder geschweißten, Stahlrohrs, insb. eines Edelstahlrohrs, gebildet ist; und/oder
- wobei die Wandung des Grundkörpers und die Sensorhalterung jeweils aus einem gleichen Material, insb. einer Nickelbasislegierung, bestehen; und/oder
- wobei die Wandung des Grundkörpers aus einer Nickelbasislegierung besteht; und/oder
- wobei die Sensorhalterung aus einer Nickelbasislegierung, besteht; und/oder
- wobei die Sensorhalterung wenigstens eine, insb. durch ein subtraktives, nämlich materialabtragendes Fertigungsverfahren hergestellte, planare Oberfläche aufweist; und/oder
- wobei die Sensorhalterung wenigstens eine, insb. planare, Oberfläche aufweist, die durch ein subtraktives, nämlich materialabtragendes Fertigungsverfahren, insb. Fräsen und/oder Erodieren, hergestellt ist.

3. Meßrohr nach einem der vorherigen Ansprüche, wobei die Sensorhalterung als, insb. hohlzylindrischer und/oder planare Anschluß- und/oder Montagefläche (120a`) für die wenigstens eine Sensorkomponente aufweisender, Anschlußstutzen ausgebildet ist.

4. Meßrohr nach einem der vorherigen Ansprüche, wobei die Sensorhalterung als ein, insb. eine planare Anschluß- und/oder Montagefläche für die wenigstens eine Sensorkomponente aufweisendes, Podest ausgebildet ist.

5. Meßrohr nach einem der vorherigen Ansprüche,
- wobei der Grundkörper durch ein Urformverfahren, insb. ein Gießverfahren, und/oder durch ein Umformverfahren, insb. ein Strangpreßverfahren, hergestellt ist; und/oder
- wobei die Sensorhalterung nach der Herstellung des Grundkörpers hergestellt ist; und/oder
- wobei die Sensorhalterung zumindest anteilig durch wenigstens eines der folgenden additiven Fertigungsverfahren hergestellt ist:
- selektives Laserschmelzen (SLM);
-- selektives Lasersintern (SLS);
-- Elektronenstrahlschmelzen (Electron Beam Melting = EBM);
-- Auftragschweißen (Cladding);
-- Metall-Pulver-Auftragsverfahren (MPA);
-- Kaltgasspritzen;
-- Elektronenstrahlschweißen (Electron Beam Welding = EBW).

6. Meßrohr nach einem der vorherigen Ansprüche,
- wobei zumindest ein, insb. als Durchgangsbohrung ausgebildeten, Durchgangskanal vorgesehen ist, der sich teilweise durch die Sensorhalterung und teilweise durch die Wandung (110a) des Grundkörpers (110) erstreckt; und/oder
- wobei zumindest ein, insb. als Sacklochbohrung ausgebildetes, Sackloch mit einem offenen Ende und mit einem geschlossenen Ende vorgesehen ist, welches Sackloch sich teilweise durch die Sensorhalterung und teilweise durch die Rohrwand erstreckt, derart, daß das offene Ende in der Sensorhalterung und das geschlossene Ende innerhalb der Wandung des Grundkörpers verortet sind.

7. Meßgerät, insb. Durchfluß-Meßgerät, zum Messen wenigstens einer Meßgröße eines, insb. strömenden, Fluids, welches Meßgerät umfaßt:
- ein Meßrohr (10) nach einem der vorherigen Ansprüche;
- einen an nämlichem Meßrohr befestigten, insb. zumindest teilweise in das Lumen des Grundkörpers hineinragenden, Sensor (20) zum Erfassen wenigstens einer Meßgröße eines im Lumen des Meßrohrs befindlichen Meßstoffs und zum Erzeugen eines nämliche Meßgröße repräsentierenden Sensorsignals, von welchem Sensor zumindest eine Komponente mit der Sensorhalterung, insb. wieder lösbar, mechanisch verbunden ist;
- sowie eine mit dem Sensor elektrisch verbundene, insb. mittels wenigstens eines Mikroprozessors gebildete, Meßelektronik (ME), die dafür eingerichtet ist, das wenigstens eine Sensorsignal zu empfangen und zu verarbeiten, insb. nämlich basierend auf dem wenigstens einen Sensorsignal Meßwerte für die wenigstens eine Meßgröße zu ermitteln.

8. Meßgerät nach dem vorherigen Anspruch, bei welchem Meßgerät es sich um ein Durchflußmeßgerät, insb. ein Wirbel-Durchflußmeßgerät, ein Ultraschall-Durchflußmeßgerät, ein Coriolis-Durchflußmeßgerät, ein vibronisches Dichte- und/oder Viskositäts-Meßgerät, ein thermisches Durchflußmeßgerät, oder ein magnetisch-induktives Durchflußmeßgerät, handelt.

9. Meßgerät nach Anspruch 7 oder 8,bei welchem Meßgerät es sich um ein Ultraschall-Durchflußmeßgerät handelt, wobei die Sensorhalterung als Koppelelement für einen Ultraschallwandler dient.

10. Meßgerät nach Anspruch 7 oder 8, bei welchem Meßgerät es sich um ein Wirbel-Durchflußmeßgerät handelt, wobei die mit der Sensorhalterung verbundene Komponente des Sensors ein eine in das Lumen hineinragende Sensorfahne haltender, insb. scheibenförmiger bzw. membranartiger, Verformungskörper ist.

11. Meßgerät nach Anspruch 7 oder 8, bei welchem Meßgerät es sich um ein Coriolis-Massendurchflußmeßgerät und/oder um ein vibronisches Dichte- und/oder Viskositäts-Meßgerät handelt, wobei die mit der Sensorhalterung verbundene Komponente des Sensors eine Spule ist oder wobei die mit der Sensorhalterung verbundene Komponente des Sensors ein, insb. becherförmiger, Permanentmagnet ist.

12. Meßgerät nach Anspruch 7, bei welchem Meßgerät es sich um ein Temperatur-Meßgerät handelt.

13. Meßgerät nach Anspruch 7, bei welchem Meßgerät es sich um ein pH-Wert-Meßgerät handelt.

14. Meßgerät nach Anspruch 7, bei welchem Meßgerät es sich um ein Druck-Meßgerät handelt.

15. Verfahren zum Herstellen eines Meßrohrs für ein Meßgerät, insb. zum Herstellen eines Meßrohrs gemäß einem der Ansprüche 1 bis 6 und/oder zum Herstellen eines Meßrohrs für ein Meßgerät gemäß einem der Ansprüche 7 bis 14, welches Verfahren umfaßt:
- Bereitstellen eines röhrenförmigen, insb. zumindest abschnittsweise hohlzylindrischen, Grundkörpers mit einer metallischen Wandung und einem davon umhüllten, insb. zylinderförmigen, Lumen;
- Auftragen von verflüssigtem Metall, auf eine äußere, nämlich dem Lumen abgewandte, insb. zumindest abschnittsweise gewölbte, Mantelfläche der Wandung des Grundkörpers;
- sowie Erstarrenlassen von auf der äußeren Mantelfläche appliziertem flüssigem Metall zum Bilden eines mit der Wandung des Grundkörpers stoffschlüssig verbundenen Teilstücks einer Sensorhalterung für einen dem Erfassen wenigstens einer Meßgröße eines im Lumen befindlichen, insb. fluiden, Meßstoffs dienlichen Sensor, welche Sensorhalterung dafür vorgesehen bzw. eingerichtet ist, zumindest mit wenigstens einer Sensorkomponente, nämlich einer Komponente des Sensors, insb. wieder lösbar, mechanisch verbunden zu werden.

16. Verfahren nach dem vorherigen Anspruch, weiters umfassend:
- Auftragen von verflüssigtem Metall, auf eine äußere, nämlich dem Lumen abgewandten Fläche eines zuvor gebildeten Teilstücks der Sensorhalterung;
- sowie Erstarrenlassen von auf nämlicher äußeren Fläche des zuvor gebildeten Teilstücks appliziertem flüssigem Metall zum Vergrößern nämlichen Teilstücks bzw. zum Bilden eines weiteren Teilstücks der Sensorhalterung.

17. Verfahren nach dem vorherigen Anspruch, weiters umfassend: Abtragen von überschüssigen Material aus einem zuvor gebildeten Teilstück der Sensorhalterung.

18. Verfahren nach einem der Ansprüche 15 bis 17, weiters umfassend:
- Ausbilden, insb. Ausbohren und/oder Ausfräsen, eines sich teilweise durch die Sensorhalterung und teilweise durch die Rohrwand erstreckenden Durchgangskanals; und/oder
- Ausbilden, insb. Ausbohren und/oder Ausfräsen, eines sich teilweise durch die Sensorhalterung und teilweise durch die Rohrwand erstreckenden Sacklochs mit einem offenen Ende und mit einem geschlossenen Ende, derart, daß das offene Ende in der Sensorhalterung und das geschlossene Ende innerhalb der Wandung des Grundkörpers verortet sind.

## Claims

1. A measuring pipe for a measurement device, in particular for a flow measurement device, wherein the measuring pipe in particular exhibits a hollow cylindrical form at least in sections, comprising:
- a tubular body (110), in particular exhibiting a hollow cylindrical form at least in sections, with a wall (110a) and a lumen (110b) that is enclosed by said wall, in particular exhibiting a cylindrical shape, and configured to carry a fluid process medium (FL1);
- as well as a sensor bracket (120) that is arranged on and firmly bonded to an outer surface (110a') of the wall (110a) of the body (110) such that it faces outward, namely away from the lumen, in particular exhibiting a convex shape at least in sections, and in particular produced as a connecting piece, which is configured to be mechanically connected to at least one sensor component, namely a component of a sensor used to record at least one measured variable of a process medium located in the lumen, in such a way that it can be removed again;
- wherein both the wall of the body and also the sensor bracket are produced from metal;
- and wherein the sensor bracket is produced directly on the outer surface of the wall of the body, which itself was in particular produced in a prior primary shaping process, at least partially in an additive production process, in particular a fused deposition process and/or a powder bed process.

2. A measuring pipe according to one of the preceding claims,
- wherein the body is formed by a steel pipe, in particular a cast, pressed, or welded pipe, in particular a stainless steel pipe; and/or
- wherein the wall of the body and the sensor bracket are each produced from the same material, in particular a nickel-base alloy; and/or
- wherein the wall of the body is produced from a nickel-base alloy; and/or
- wherein the sensor bracket is produced from a nickel-base alloy; and/or
- wherein the sensor bracket exhibits at least one planar surface, in particular produced in a subtractive, namely material-removing production process; and/or
- wherein the sensor bracket exhibits at least one, in particular planar, surface that is produced in a subtractive, namely material-removing, production process, in particular milling and/or eroding.

3. A measuring pipe according to one of the preceding claims, wherein the sensor bracket is produced as a connection and/or mounting surface (120a'), in particular with a hollow cylindrical and/or planar structure, for the connector exhibiting at least one sensor component.

4. A measuring pipe according to one of the preceding claims, wherein the sensor bracket is produced as a pedestal, in particular exhibiting a planar connecting and/or mounting surface for the at least one sensor component.

5. A measuring pipe according to one of the preceding claims,
- wherein the body is produced in a primary shaping process, in particular a casting process, and/or in a forming process, in particular an extrusion molding process; and/or
- wherein the sensor bracket is produced after production of the body; and/or
- wherein the sensor bracket is produced at least in part by at least one of the following additive production processes:
∘ Selective laser melting (SLM);
∘ Selective laser sintering (SLS);
∘ Electron beam melting (EBM);
∘ Deposition welding (cladding);
∘ Metal powder application (MPA);
∘ Cold gas spraying;
∘ Electron beam welding (EBW).

6. A measuring pipe according to one of the preceding claims,
- wherein at least one passage conduit is provided, in particular produced as a through bore, that extends partially through the sensor bracket and partially through the wall (110a) of the body (110); and/or
- wherein at least one blind hole is provided, in particular produced as a blind borehole, with one open end and one closed end, wherein the blind hole extends partially through the sensor bracket and partially through the pipe wall in such a way that the open end is located in the sensor bracket and the closed end is located within the wall of the body.

7. A measurement device, in particular a flow measurement device, for measuring at least one measured variable of an, in particular flowing, fluid, wherein the measurement device comprises:
- a measuring pipe (10) according to one of the preceding claims;
- a sensor (20) that is attached to said measuring pipe, in particular projecting at least partially into the lumen of the body, for recording at least one measured variable of a process medium located in the lumen of the measuring tube and for generating a sensor signal representing said measured variable, wherein at least one component of the sensor is mechanically connected to the sensor bracket, in particular in such a way that it can be removed again;
- as well as measuring electronics (ME) that in particular comprise at least one microprocessor, that are electrically connected to the sensor and that are configured to receive and process the at least one sensor signal, in particular to determine measured values for the at least one measured variable on the basis of the at least one sensor signal.

8. A measurement device according to the previous claim, wherein the measurement device is a flow measurement device, in particular a vortex flow measurement device, an ultrasonic flow measurement device, a Coriolis flow measurement device, a vibronic density and/or viscosity measurement device, a thermal flow measurement device, or a magnetic-inductive flow measurement device.

9. A measurement device according to claim 7 or 8, wherein the measurement device is an ultrasonic flow measurement device, wherein the sensor bracket serves as a coupling element for an ultrasonic transducer.

10. A measurement device according to claim 7 or 8, wherein the measurement device is a vortex flow measurement device, wherein the component of the sensor that is connected to the sensor bracket is a deformation element, in particular a disk-shaped or diaphragm-like element, holding a sensor flag that projects into the lumen.

11. A measurement device according to claim 7 or 8, wherein the measurement device is a Coriolis mass flow measurement device and/or a vibronic density and/or viscosity measurement device, wherein the component of the sensor that is connected to the sensor bracket is a coil, or wherein the component of the sensor that is connected to the sensor bracket is a permanent magnet, in particular a cup-shaped magnet.

12. A measurement device according to claim 7, wherein the measurement device is a temperature measurement device.

13. A measurement device according to claim 7, wherein the measurement device is a pH value measurement device.

14. A measurement device according to claim 7, wherein the measurement device is a pressure measurement device.

15. A method for producing a measuring pipe for a measurement device, in particular for producing a measuring pipe according to one of the claims 1 to 6, and/or for producing a measuring pipe for a measurement device according to one of the claims 7 to 14, wherein the method comprises:
- provision of a tubular body, in particular exhibiting a hollow cylindrical form at least in sections, with a metallic wall and a lumen, in particular exhibiting a cylindrical shape, that is encased by this;
- application of molten metal onto an outer surface of the wall of the body, namely a wall facing away from the lumen, in particular exhibiting a convex shape at least in sections;
- as well as solidification of the molten metal applied to the outer surface to form a section of a sensor bracket that is firmly bonded to the wall of the body for a sensor used to record at least one measured variable of a process medium, in particular a fluid process medium, that is located in the lumen, wherein the sensor bracket is configured to be mechanically connected to at least one sensor component, namely a component of the sensor, in particular in such a way that it can be removed again.

16. A method according to the preceding claim, further comprising:
- application of molten metal onto an outer surface, namely a surface facing away from the lumen, of a previously formed section of the sensor bracket;
- as well as solidification of the molten metal applied to said outer surface of the previously formed section for the purpose of increasing the size of said section or forming another section of the sensor bracket.

17. A method according to the preceding claim, further comprising: removal of surplus material from a previously formed section of the sensor bracket.

18. A method according to one of the claims 15 to 17, further comprising:
- forming, in particular drilling and/or milling, a passage conduit that extends partially through the sensor bracket and partially through the pipe wall; and/or
- forming, in particular drilling and/or milling, a blind hole that extends partially through the sensor bracket and partially through the pipe wall with one open end and one closed end in such a way that the open end is located in the sensor bracket and the closed end is located within the wall of the body.

## Revendications

1. Tube de mesure pour un appareil de mesure, notamment pour un débitmètre, lequel tube de mesure, notamment cylindrique creux au moins par sections, comprend :
- un corps de base (110) tubulaire, notamment métallique et/ou au moins partiellement cylindrique creux, lequel corps de base présente une paroi (110a) et un canal intérieur (110b) enveloppé par ladite paroi, notamment cylindrique, lequel canal est conçu pour guider un produit mesuré fluide (FL1) ;
- ainsi qu'un support de capteur (120) disposé sur une surface d'enveloppe (110a') extérieure - notamment située à l'opposé du canal intérieur, notamment au moins partiellement bombée - de la paroi (110a) du corps de base (110), lequel canal est relié à la dite paroi par liaison de matière, lequel support de capteur est notamment réalisé sous forme de tubulure de raccordement, lequel support de capteur est conçu pour être relié mécaniquement, notamment de manière amovible, à au moins un composant de capteur, notamment un composant d'un capteur servant à mesurer au moins une grandeur de mesure d'un produit se trouvant dans le canal intérieur ;
- la paroi du corps de base et le support de capteur étant tous deux en métal ;
- et le support de capteur étant fabriqué au moins en partie par un procédé de fabrication additive, notamment un procédé de solides à forme libre et/ou un procédé à lit de poudre, directement sur la surface d'enveloppe de la paroi du corps de base, lequel corps de base est notamment fabriqué au préalable au moyen d'un procédé de formage primaire.

2. Tube de mesure selon l'une des revendications précédentes,
- pour lequel le corps de base est formé au moyen d'un tube d'acier, notamment d'un tube d'acier inoxydable, coulé, pressé ou soudé ; et/ou
- pour lequel la paroi du corps de base et le support de capteur sont respectivement constitués d'un même matériau, notamment d'un alliage à base de nickel ; et/ou
- pour lequel la paroi du corps de base est constituée d'un alliage à base de nickel ; et/ou
- pour lequel le support de capteur est constitué d'un alliage à base de nickel ; et/ou
- pour lequel le support de capteur présente au moins une surface plane, fabriquée notamment par un procédé de fabrication soustractive, à savoir par enlèvement de matière ; et/ou
- pour lequel le support de capteur présente au moins une surface, notamment plane, laquelle est fabriquée par un procédé de fabrication soustractive, à savoir par enlèvement de matière, notamment par fraisage et/ou érosion.

3. Tube de mesure selon l'une des revendications précédentes, pour lequel le support de capteur est réalisé sous la forme d'une tubulure de raccordement, notamment cylindrique creuse et/ou présentant une surface de raccordement et/ou de montage plane (120a') pour l'au moins un composant de capteur.

4. Tube de mesure selon l'une des revendications précédentes, pour lequel le support de capteur est réalisé sous la forme d'une plate-forme présentant notamment une surface de raccordement et/ou de montage plane pour l'au moins un composant de capteur.

5. Tube de mesure selon l'une des revendications précédentes,
- pour lequel le corps de base est fabriqué par un procédé de formage primaire, notamment un procédé de coulée, et/ou par un procédé de formage, notamment un procédé d'extrusion ; et/ou
- pour lequel le support de capteur est fabriqué après la fabrication du corps ; et/ou
- pour lequel le support de capteur est produit au moins en partie par au moins l'un des procédés de fabrication additive suivants :
-- fusion sélective par laser (SLM) ;
-- frittage sélection par laser (SLS) ;
-- fusion par faisceau d'électrons (EBM) ;
-- soudage par dépôt de poudre (« cladding ») ;
-- dépôt de poudre métallique (MPA) ;
-- projection à froid ;
-- soudage par faisceau d'électrons (EBW).

6. Tube de mesure selon l'une des revendications précédentes,
- pour lequel il est prévu au moins un canal de passage, réalisé notamment sous forme de trou traversant, lequel canal s'étend en partie à travers le support de capteur et en partie à travers la paroi (110a) du corps de base (110) ; et/ou
- pour lequel il est prévu au moins un trou borgne, réalisé notamment sous forme de trou borgne avec une extrémité ouverte et avec une extrémité fermée, lequel trou borgne s'étend en partie à travers le support de capteur et en partie à travers la paroi de tube, de telle sorte que l'extrémité ouverte est située dans le support de capteur et l'extrémité fermée est située à l'intérieur de la paroi du corps de base.

7. Appareil de mesure, notamment un débitmètre, destiné à mesurer au moins une grandeur de mesure d'un fluide, notamment d'un fluide en écoulement, lequel appareil de mesure comprend :
- un tube de mesure (10) selon l'une des revendications précédentes ;
- un capteur (20) fixé audit tube de mesure, lequel capteur pénètre notamment au moins partiellement dans le canal intérieur du corps de base et lequel capteur est destiné à détecter au moins une grandeur de mesure d'un produit se trouvant dans le canal intérieur du tube de mesure et à générer un signal de capteur représentant ladite grandeur de mesure, capteur dont au moins un composant est relié mécaniquement, notamment de manière amovible, au support de capteur ;
- ainsi qu'une électronique de mesure (ME) reliée électriquement au capteur, formée notamment au moyen d'au moins un microprocesseur, laquelle électronique est conçue pour recevoir et traiter l'au moins un signal de capteur, notamment pour déterminer des valeurs mesurées pour l'au moins une grandeur de mesure sur la base de l'au moins un signal de capteur.

8. Appareil de mesure selon la revendication précédente, pour lequel il s'agit d'un débitmètre, notamment d'un débitmètre vortex, d'un débitmètre à ultrasons, d'un débitmètre Coriolis, d'un débitmètre vibronique de densité et/ou de viscosité, d'un débitmètre thermique ou d'un débitmètre électromagnétique.

9. Appareil de mesure selon la revendication 7 ou 8, pour lequel il s'agit d'un débitmètre à ultrasons, le support de capteur servant d'élément de couplage pour un transducteur à ultrasons.

10. Appareil de mesure selon la revendication 7 ou 8, pour lequel il s'agit d'un débitmètre vortex, le composant du capteur relié au support de capteur étant un corps déformable, notamment en forme de disque ou de membrane, lequel corps maintient une languette de capteur pénétrant dans le canal intérieur.

11. Appareil de mesure selon la revendication 7 ou 8, pour lequel il s'agit d'un débitmètre massique Coriolis et/ou d'un appareil de mesure vibronique de densité et/ou de viscosité, le composant du capteur relié au support de capteur étant une bobine ou le composant du capteur relié au support de capteur étant un aimant permanent, notamment en forme de godet.

12. Appareil de mesure selon la revendication 7, pour lequel il s'agit d'un appareil de mesure de la température.

13. Appareil de mesure selon la revendication 7, pour lequel il s'agit d'un appareil de mesure du pH.

14. Appareil de mesure selon la revendication 7, pour lequel il s'agit d'un appareil de mesure de la pression.

15. Procédé destiné à la fabrication d'un tube de mesure pour un appareil de mesure, notamment pour la fabrication d'un tube de mesure selon l'une des revendications 1 à 6 et/ou pour la fabrication d'un tube de mesure pour un appareil de mesure selon l'une des revendications 7 à 14, ledit procédé comprenant :
- la mise à disposition d'un corps de base tubulaire, notamment cylindrique creux au moins par sections, lequel corps de base comprend une paroi métallique et un canal intérieur, notamment cylindrique, enveloppé par ladite paroi ;
- l'application de métal liquéfié sur une surface d'enveloppe extérieure de la paroi du corps de base - à savoir une surface située à l'opposé du canal intérieur - laquelle surface est notamment bombée au moins par sections ; et
- la solidification du métal liquide appliqué sur la surface d'enveloppe extérieure pour former une partie - reliée par liaison de matière à la paroi du corps de base - d'un support de capteur pour un capteur servant à détecter au moins une grandeur de mesure d'un produit, notamment fluide, se trouvant dans le canal intérieur, lequel support de capteur est prévu ou conçu pour être relié mécaniquement, notamment de manière amovible, à au moins un composant du capteur.

16. Procédé selon la revendication précédente, comprenant en outre :
- l'application de métal liquéfié sur une surface extérieure - à savoir une surface située à l'opposé du canal intérieur - d'une partie préalablement formée du support de capteur ; et
- la solidification du métal liquide appliqué sur la même surface extérieure de la partie précédemment formée, afin d'agrandir cette partie ou de former une autre partie du support de capteur.

17. Procédé selon la revendication précédente, comprenant en outre : l'enlèvement de l'excès de matériau d'une partie précédemment formée du support de capteur.

18. Procédé selon l'une des revendications 15 à 17, comprenant en outre :
- la réalisation, notamment le perçage et/ou le fraisage, d'un canal de passage s'étendant en partie à travers le support de capteur et en partie à travers la paroi du tube ; et/ou
- la réalisation, notamment le perçage et/ou le fraisage, d'un trou borgne s'étendant en partie à travers le support de capteur et en partie à travers la paroi de tube, lequel trou borgne présente une extrémité ouverte et une extrémité fermée, de telle sorte que l'extrémité ouverte est située dans le support de capteur et que l'extrémité fermée est située à l'intérieur de la paroi du corps de base.
